# EUROPEAN PATENT SPECIFICATION

(11) **EP 1 070 527 B1**
(45) Date of publication and mention of the grant of the patent: **02.04.2008**
(21) Application number: 99202365.5
(22) Date of filing: 19.07.1999
(51) Int. Cl.: B01D 21/00, C02F 1/469

(54) **Water treatment by accelerated sedimentation and/or precipitation**
Wasserbehandlung durch beschleunigte Sedimentation und/oder Fällung
Traitement d'eau par sédimentation et/ou précipitation accélérées

(43) Date of publication of application: 24.01.2001
(73) Proprietor: Holland Environment B.V., 4191 PL Geldermalsen (NL)
(72) Inventor: Lageman, Reinout, 2631 CN Nootdorp (NL); Pool, Wieberen, 9728 RC Groningen (NL)
(74) Representative: Griebling, Onno

(56) References cited:
- WO-A-80/02046
- FR-A- 1 516 158
- US-A- 4 244 804
- US-A- 4 367 132
- US-A- 4 808 304
- US-A- 5 435 893
- US-A- 5 643 443

## Description

The present invention relates to a method of accelerating a sedimentation process.

Sedimentation is the precipitation or settling of insoluble, solid materials from a suspension or slurry. Usually, this is a rather slow process, wherein gravity is the driving force.

In the past, sediments or sludges from rivers, canals, harbors, and the like were either used as filler material for e.g. new building sites or they were simply dumped into the sea. Since the early eighties, however, an awareness has grown that most sludges are contaminated with e.g. heavy metals, organic compounds from combustion or petroleum refinery processes, pesticides, solvents and so forth. As a result, dredging, reuse and dumping of sludges has become subject to various strict governmental regulations in most countries.

In anticipation of efficient remediation techniques for removing the contaminants from the sludges, large scale lagoons have been constructed wherein these sludges could be stored temporarily. After almost twenty years of research, experiments and large scale tryouts it has dawned upon the regulators that no clean-up technology is, nor will be available in the foreseeable future, to remediate the enormous volume of sludges in an efficient and economical manner. In view thereof, there is a tendency to accept the fact that temporary storage of sludges will become permanent.

As sludge is a suspension comprising both solid and liquid material(s), sedimentation occurs. After the solids have settled, the remaining water has to be removed in order to increase the capacity of the lagoons. However, not only is the rate of sedimentation relatively slow, most contaminants present in the sludge are adsorbed to the fine sediment fraction (clay, organic and other fine particles) of the sludge. A large amount of these contaminated fine particles remains floating in the water layer that forms on top of the newly formed sediments. As a result, the water layer needs to be treated, before it may be discharged into the surface water.

The permanent nature of sludge lagoons requires a shift in attention from clean-up technologies towards technologies which enable volume reduction and increase in sedimentation velocity. Surprisingly, it has now been found that a sedimentation process may be accelerated by way of applying an electrical field. Thus, the invention relates to a method of accelerating a sedimentation process by applying an electrical field by means of at least a first and a second electrode, connected to a power supply for generating the electrical field, wherein the second electrode as arranged above the first electrode to a mixture comprising solid and liquid material, wherein at least the first electrode is present in a housing, which is permeable to current, ions, charged particles and liquid, according to claim 1.

A devicce according to undependent claims 10 and 12 as also disclosed.

The use of an electric field in the treatment of mixtures comprising solid and liquid material is known.

US-A 4 367 132 relates to dewatering of a slurry wherein a direct current is lead through the slurry to improve the settling rate of the particles.

FR-A 1 516 158 relates to a decantation process wherein an electrode is positioned at the bottom and at the surface of a decantation vessel.

It has been found that the presence of an electrical field in a suspension, such as sludges from dredging operations, increases the rate at which solid materials in the suspension settle. This effect has been observed using an electrical field in any direction, be it vertical, horizontal or diagonal. Also, the electrical field may originate from a direct current (DC) or an alternating current (AC) power source.

The method of the invention provides a significant increase in the capacity of the permanent storage lagoons for sludges. The invention may further find application in the purification and treatment of potable water or sewage water.

Moreover, the invention may find application in the removal of iron(III) -particles in groundwater. Groundwater usually contains significant amounts of iron(II) ions. When groundwater comes into contact with the atmosphere, these ions will oxidize to iron(III) ions, which give the water a reddish brown color. Also, the presence of iron(III) ions tends to lead to the formation of agglomerates or flocculation. The formed agglomerates, which are solid particles, may efficiently be removed from the ground water by use of a method according to the invention.

In principle, sedimentation can take place in any medium wherein liquid and solid materials are present, such as a slurry or suspension. Thus, the invention can be practiced on any mixture wherein one or more liquid materials and one or more solid materials are present and where it is intended that the solid materials are separated from the liquid materials. In a preferred embodiment, the liquid material is water, preferably groundwater or surface water, thus water from a natural source. The solid materials can be of various types, most encountered solids in natural water are clay and sand particles and organic material(s) from the remains of animals, plants, algae, seaweed, micro-organisms and the like.

In order to apply the electrical field to the mentioned mixture of solid and liquid material, said mixture is preferably present in a container . By the term container, any means for holding the mixture and keeping it separate from its surroundings is intended. Thus, this term is meant to include any type of storage facility, such as basins, lagoons, ponds, ditches and the like, as well as vessels, tanks and containers made of various materials. In accordance with the invention, the container may either be closed or open at the top.

As has been mentioned above, the effect of acceleration of sedimentation is achieved in any configuration of the electrodes. Thus, as the sedimentation direction will usually be downward by virtue of gravity, the electrical field may be directed vertically, horizontally or diagonally. The largest accelerating effect, however, has been observed when the electrical field is applied in the same direction as the sedimentation. Therefore, it is preferred that at least a first electrode is located at or near the bottom of the container or of the mixture of solid and liquid materials present therein. At least a second electrode may then be present at or near the top of the container. It is also possible to arrange the second electrode so that it floats on the mixture of solid and liquid material. It is of course possible that there are more than two electrodes present, for instance wherein several electrodes provide a positive pole, and several others provide a negative pole.

In general, it will depend on the nature of the mixture of solid and liquid materials, in particular on the nature of the solid material, whether the first or the second electrode is the anode or the cathode. It is preferred, particularly, when the solid material comprises bentonite, that the first electrode is the anode, and the second electrode is the cathode. It has been found, that in this manner sedimentation velocity is increased significantly. In addition it has been found, that the water on top of the settled solid material is very clear and may be discharged without further purification.

The power source is a source of DC voltage/current (with a positive and a negative pole) or AC voltage/current. Preferably, the power source generates DC voltage/current, AC voltage/current, DC voltage/current optionally with an alternating voltage/current superimposed thereon, or a pulsing DC voltage/current . In a preferred embodiment, the power source generates a DC voltage the polarity of which is reversed after a certain period of time. Thus, for a period of time, for instance the first electrode is the anode, and after said period of time the first electrode becomes the cathode, or vice versa. The reversal of the polarity may be desired in case fine particles of different origin are present in the mixture of solid and liquid materials. Prior to the application of the electrical field, such particles may have an electrical charge of their own. During sedimentation, the electrochemical properties of the particles may be altered permanently. As a result, these fine particles also precipitate faster in accordance with the invention. Dependent on the nature of the mixture of solid and liquid materials, in particular the nature of any fine particulate matter present therein, the skilled person will be able to determine if and when the polarity of the electrical field should be reversed. The magnitude of the voltage generated by the power source may be between a terminal voltage and any voltage that is still considered safe enough for the specific application at hand, for instance 4000 V. It is, however, an advantage of the invention that a relatively small voltage is sufficient to obtain the desired acceleration of a sedimentation process. It is preferred that the potential drop is less than 400 V/m, more preferably between 20 and 100 V/m. The magnitude of the potential drop will be chosen taking into account the conductivity of the mixture of solid and liquid materials, particularly of the liquid material. In general, the current density at the electrode surface is of importance.

The housing may take the form of a chamber closed all round, one or more walls of which are made of a porous ceramic material, but may alternatively take the form of a hollow tube. The form of housing selected depends partly upon the mixture of solid and liquid material that is subjected to sedimentation. Preferably, the housing includes means for connecting the housing to a supply means and to a discharge means of a liquid circulation system. In this arrangement, the housings may each include means through which one or more sensors can be brought into contact with anode mediums and cathode mediums to be maintained in said housings and serving for the current conducting connections with the mixture of solid and liquid material that is subjected to sedimentation. The presence of the housing allows for control of the environment of the electrodes, as has been set forth in the European patent 0 312 174 B1 and US patents 5,589,056 and 5,433,829.

A suitable material for an anode according to the invention can be any conductor (metal, ceramic, plastic, graphite, liquid etc.) but preferably a noble metal, a conductive ceramic, or a combination of a noble metal with another material, as long as the material of the anode is not, or only slowly decomposable under the conditions of the present method. In practice, the cost of an anode made of such a material may be prohibitive, however, and the use of a non-noble metal material may be preferred. When selecting such a material it should preferably be ensured that the products of decomposition formed from the anode material cannot migrate outside through the mixture of solid and liquid material. One example of such a material is carbon (graphite) or any other material of which the products of decomposition do not give any (additional) problems to the solid or liquid phase of the treated mixture of solid and liquid materials. Under the influence of a method according to the invention, an anode of graphite may be corroded in time. However, the products of decomposition formed at or from the carbon material of the anode are gaseous and can be removed from the anode housing, if present, in a simple manner, or solid and settle within the anode housing, if present, or at any rate are not transportable outside the anode housing, if present.

The material chosen for the cathode is not critical any may be any suitable electrode material. Examples of such materials are reinforcement bars, steel cable, iron or steel pipes and the like. Should, however, an alternating current or a direct current which is changed in current direction at least once during carrying out the present method, be used, the cathode is preferably of the same material as the anode.

The invention further relates to a sedimentation device for carrying out the method described above. Said device is provided with at least a first and a second electrode, both electrodes being connected to a power source and being arranged such that they accelerate sedimentation, wherein the first electrode is provided at or near the bottom of said vessel, and wherein the second electrode is provided at the top of said vessel or is provided such that it may float on material present in said device.

Preferably, the sedimentation device comprises a vessel, which may be manufactured of any type of suitable material, such as concrete, wood, plastic or metal. In case the vessel is of a metallic material, it may be recommendable to provide it with an insulating coating for prevention of corrosion as a result of short-circuiting. In a preferred embodiment, the sedimentation device is present on board of a dredging device, such as a floating barge, or dredge. Particularly preferred is a configuration wherein one or more holds of a floating sludge barge is designed such that it may be used as the present sedimentation device. In the context of the present invention a dredging device is any piece of machinery that can be used to dredge sediment or sludge from the bottom of surface water, e.g. a river, a channel, a ditch, a pond, an estuary or a harbor, either by suction or shoveling. A floating dredge is a specific type of dredging device that floats on said surface water.

The invention will now be elucidated by the following, non-restrictive example.

### EXAMPLE

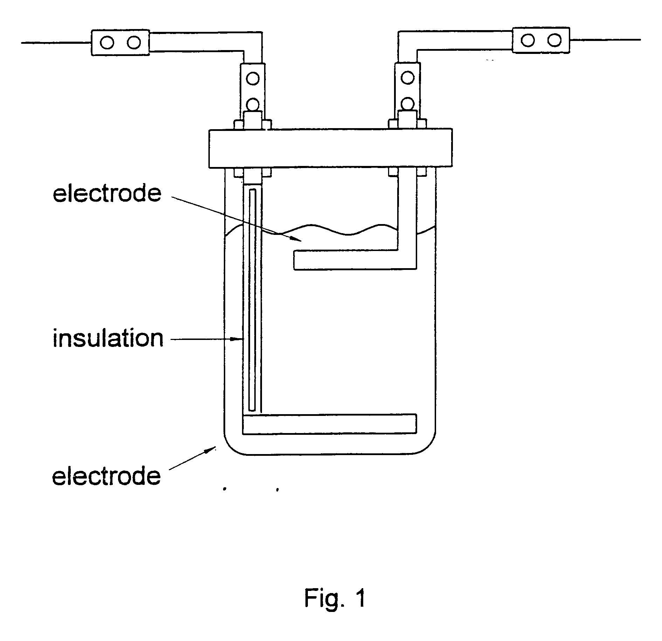

Four homogeneous suspensions A, B, C, D (EC 170 µS/cm at 20°C) were prepared of 10 g bentonite in 500 ml tap water (EC 310 µS/cm at 20°C) by thorough stirring. Each of these suspensions was placed in a glass pot, which was placed in front of a video camera. This camera was configured to make a recording each minute during a period of six hours. One of the pots (sample A) was used as a reference; in all others electrode systems, connected to a power source, were placed as shown in Figure 1.

In sample B, the cathode was present just below the suspension surface, while the anode was located near the bottom of the pot. A direct current (2.5 A/m² sludge) was applied. The initial potential drop had a magnitude of 140 V/m sludge, after 6 hours it had decreased to 90 V/m. The total energy applied was about 1.2 kWh/m³ sludge.

In sample C, the cathode and anode were reversed: the cathode was present near the bottom, while the anode was located just below the suspension surface. A direct current (2.5 A/m² sludge) was applied. The initial potential drop had a magnitude of 140 V/m sludge, after 6 hours it had decreased to 110 V/m. The total energy applied was about 1.3 kWh/m³ sludge.

In sample D, alternating current was applied (0.45 A/m² sludge). The initial potential drop was 25 V_{eff}/m sludge symmetrical block wave, after 6 hours it had decreased to 18 V_{eff}/m sludge symmetrical block wave. The total energy applied was 0.05 kWh/m³.

Table 1 shows the results (V), expressed as the factor of acceleration of sedimentation relative to sample A, as determined visually. This table also shows the turbidity of the water on top of the settled solid material after 5 hours as determined visually.

**Table 1**

| Sample | V | Turbidity |
|---|---|---|
| A | 1 | turbid |
| B | 2.5 - 3 | none |
| C | 2 - 2.5 | turbid |
| D | 2 - 2.5 | turbid |

## Claims

1. Method for accelerating a sedimentation and/or precipitation process by applying an electrical field to a mixture comprising solid and liquid material, using at least a first electrode and a second electrode connected to opposite poles of a power source for generating the electrical field, wherein the second electrode is arranged above the first electrode;
at least the lower first electrode being arranged in a housing which is permeable to current, ions, charged particles and liquid.

2. Method according to claim 1, wherein the housing of the lower electrode is at least partly made of a porous ceramic material.

3. Method according to claim 1 or 2, wherein the mixture is present in a container provided with at least the first and second electrodes.

4. Method according to claim 3, wherein the first electrode is located at or near the bottom of the container, and the second electrode is located at or near the top of the container or floats on the mixture.

5. Method according to any of claims 1-4, wherein the first and second electrodes are connected to:
a) a power source continuously generating a direct current (DC);
or b) a power source generating a direct current (DC) of which the polarity is reversed after a certain period of time;
or c) a power source generating an alternating current (AC);
or d) a power source generating a direct voltage/current with an alternating voltage/current superimposed thereon;
or e) a power source generating a pulsing direct voltage/current.

6. Method according to any of claims 1-4, wherein the first and second electrodes are connected to a power source continuously generating a direct current (DC), wherein the lower first electrode is an anode and the upper second electrode is a cathode.

7. Method according to any of claims 1-6, wherein the power source generates a voltage of a magnitude between a terminal voltage and 15,000 Volts.

8. Method according to claim 7, wherein the potential drop is less than 400 V/m, preferably between 10 and 100 V/m.

9. Method according to any of the previous claims, wherein the anode comprises a noble metal, a combination of a metal, a ceramic or a plastic material with a noble metal and/or graphite.

10. Sedimentation device, comprising:
a vessel for containing a mixture of solid and liquid material;
a first electrode arranged at or near the bottom of said vessel;
a second electrode arranged at or near the top of said vessel or arranged such that it may float on material present in said vessel; wherein said electrodes can be connected to a power source such that they accelerate sedimentation of material present in said vessel; at least the lower first electrode being arranged in a housing which is permeable to current, ions, charged particles and liquid.

11. Sedimentation device according to claim 10, wherein the housing of the lower electrode is at least partly made of a porous ceramic material.

12. Dredging device comprising a sedimentation device according to claim 10 or 11.

## Patentansprüche

1. Verfahren zum Beschleunigen eines Sedimentations- und/oder Präzipitations-Prozesses durch Anlegen eines elektrischen Feldes an eine Fest- und Flüssigmaterial umfassende Mischung, unter Verwendung zumindest einer ersten Elektrode und einer zweiten Elektrode, die mit entgegengesetzten Polen einer Stromquelle zum Erzeugen des elektrischen Feldes verbunden sind, wobei die zweite Elektrode über der ersten Elektrode angeordnet ist; wobei zumindest die untere erste Elektrode in einem Gehäuse angeordnet ist, das für Strom, Ionen, geladene Partikel und Flüssigkeit permeabel ist.

2. Verfahren gemäß Anspruch 1, wobei das Gehäuse der unteren Elektrode zumindest teilweise aus einem porösen keramischen Material hergestellt ist.

3. Verfahren gemäß Anspruch 1 oder 2, wobei die Mischung in einem Behälter vorliegt, der mit zumindest den ersten und zweiten Elektroden versehen ist.

4. Verfahren gemäß Anspruch 3, wobei die erste Elektrode an oder nahe dem Boden des Behälters lokalisiert ist und die zweite Elektrode an oder nahe dem oberen Ende des Behälters lokalisiert ist oder auf der Mischung flottiert.

5. Verfahren gemäß einem der Ansprüche 1 bis 4, wobei die ersten und zweiten Elektroden verbunden sind mit:
a) einer kontinuierlich einen Gleichstrom (V=) erzeugenden Stromquelle; oder
b) einer Gleichstrom (V=) erzeugenden Stromquelle, deren Polarität nach einer gewissen Zeitdauer umgekehrt wird; oder
c) einer Wechselstrom (V~) erzeugenden Stromquelle; oder
d) einer eine Gleichspannung/-strom mit einem darauf überlagerten Wechselspannung/-strom erzeugenden Stromquelle; oder
e) einer pulsierende Gleichspannung/-strom erzeugenden Stromquelle.

6. Verfahren gemäß einem der Ansprüche 1 bis 4, wobei die ersten und zweiten Elektroden mit einer Stromquelle verbunden sind, die kontinuierlich eine Gleichspannung (V=) erzeugt, wobei die untere erste Elektrode eine Anode ist und die obere zweite Elektrode eine Kathode ist.

7. Verfahren gemäß einem der Ansprüche 1 bis 6, wobei die Stromquelle eine Spannung einer Größenordnung zwischen einer Anschluss-Spannung und 15.000 Volt erzeugt.

8. Verfahren gemäß Anspruch 7, wobei der Potentialabfall weniger als 400 V/m, vorzugsweise zwischen 10 und 100 V/m beträgt.

9. Verfahren gemäß einem der vorangehenden Ansprüche, wobei die Anode ein Edelmetall, eine Kombination eines Metalls, einer Keramik oder eines Plastikmaterials mit einem Edelmetall, und/oder Graphit umfasst.

10. Sedimentationsvorrichtung, umfassend:
- ein Gefäß zum Aufnehmen einer Mischung von festem und flüssigem Material;
- eine erste Elektrode, die an oder nahe dem Boden des Gefäßes angeordnet ist;
- eine zweite Elektrode, die an oder nahe dem oberen Ende des Gefäßes angeordnet ist oder so angeordnet ist, dass sie auf in dem Gefäß vorhandenem Material flottieren kann;
- wobei die Elektroden mit einer Stromquelle so verbunden sein können, dass sie die Sedimentation von in dem Gefäß vorhandenen Material beschleunigen;
- wobei zumindest die untere erste Elektrode in einem Gehäuse angeordnet ist, das für Strom, Ionen, geladene Partikel und Flüssigkeit permeabel ist.

11. Sedimentationsvorrichtung gemäß Anspruch 10, wobei das Gehäuse der unteren Elektrode zumindest teilweise aus einem porösen keramischen Material hergestellt ist.

12. Baggervorrichtung, umfassend eine Sedimentationsvorrichtung gemäß Anspruch 10 oder 11.

## Revendications

1. Procédé permettant d'accélérer un processus de sédimentation et/ou de précipitation par application d'un champ électrique à un mélange comprenant des matériaux solides et liquides, en utilisant au moins une première électrode et une seconde électrode connectées à des pôles contraires d'une source d'alimentation pour produire le champ électrique, la seconde électrode étant disposée au-dessus de la première électrode, la première électrode au moins étant placée dans un boîtier qui est perméable au courant, aux ions, aux particules chargées et aux liquides.

2. Procédé selon la revendication 1, dans lequel le boîtier de l'électrode inférieure est au moins en partie constitué d'un matériau céramique poreux.

3. Procédé selon la revendication 1 ou 2, dans lequel le mélange est présent dans un récipient muni au moins des première et seconde électrodes.

4. Procédé selon la revendication 3, dans lequel la première électrode est située au fond du récipient ou à proximité, et la seconde électrode est située au sommet du récipient ou à proximité, ou bien flotte sur le mélange.

5. Procédé selon l'une quelconque des revendications 1 à 4, dans lequel les première et seconde électrodes sont connectées :
a) à une source d'alimentation qui produit en continu un courant continu (DC) ;
ou b) à une source d'alimentation qui produit un courant continu (DC) dont la polarité est inversée après un certain intervalle de temps ;
ou c) à une source d'alimentation qui produit du courant alternatif (AC) ;
ou d) à une source d'alimentation qui produit un(e) courant/tension continu(e) avec superposition d'un(e) courant/tension alternatif(ve) ;
ou e) à une source d'alimentation qui produit un(e) courant/tension continu(e) pulsé(e).

6. Procédé selon l'une quelconque des revendications 1 à 4, dans lequel les première et seconde électrodes sont connectées à une source d'alimentation qui produit en continu un courant continu (DC), la première électrode, ou électrode inférieure, étant une anode et la seconde électrode, ou électrode supérieure, étant une cathode.

7. Procédé selon l'une quelconque des revendications 1 à 6, dans lequel la source d'alimentation produit une tension dont l'amplitude est comprise entre une tension aux bornes et 15 000 volts.

8. Procédé selon la revendication 7, dans lequel la chute de potentiel est inférieure à 400 V/m, et est de préférence comprise entre 10 et 100 V/m.

9. Procédé selon l'une quelconque des revendications précédentes, dans lequel l'anode comprend un métal noble, une association d'un métal, d'une céramique ou d'un plastique avec un métal noble et/ou du graphite.

10. Dispositif de sédimentation, comprenant:
une cuve destinée à contenir un mélange de matériaux solides et liquides ;
une première électrode placée au fond de ladite cuve ou à proximité ;
une seconde électrode placée au sommet de ladite cuve ou à proximité, ou bien placée de façon à pouvoir flotter sur les matériaux présents dans ladite cuve;
dans lequel lesdites électrodes peuvent être connectées à une source d'alimentation telle qu'elles accélèrent la sédimentation des matériaux présents dans ladite cuve ;
la première électrode au moins étant placée dans un boîtier qui est perméable au courant, aux ions, aux particules chargées et aux liquides.

11. Dispositif de sédimentation selon la revendication 10, dans lequel le boîtier de l'électrode inférieure est au moins en partie constitué d'un matériau céramique poreux.

12. Dispositif de dragage comprenant un dispositif de sédimentation selon la revendication 10 ou 11.
